# EUROPEAN PATENT SPECIFICATION

(11) **EP 3 805 986 B1**
(45) Date of publication and mention of the grant of the patent: **09.12.2026**
(21) Application number: 19201614.5
(22) Date of filing: 07.10.2019
(51) Int. Cl.: G06V 10/26, G06V 10/34, G06V 10/44, G06V 10/776, G06V 10/82

(54) **METHOD FOR TRAINING A SEMANTIC SEGMENTATION NETWORK**
VERFAHREN ZUM TRAINIEREN EINES SEMANTISCHEN SEGMENTIERUNGSNETZWERKS
PROCÉDÉ D'ENTRAÎNEMENT D'UN RÉSEAU DE SEGMENTATION SÉMANTIQUE

(43) Date of publication of application: 14.04.2021
(73) Proprietor: Robert Bosch GmbH, 70442 Stuttgart (DE)
(72) Inventor: Guo, Ze, 70173 Stuttgart (DE)

(56) References cited:
- NAMITA SENGAR ET AL: "Edge detection by combination of morphological operators with different edge detection operators", INTERNATIONAL JOURNAL OF INFORMATION & COMPUTATION TECHNOLOGY NUMBER, 1 January 2014 (2014-01-01), pages 1051 - 1056, XP055681192, Retrieved from the Internet <URL:http://www.ripublication.com/irph/ijict_spl/ijictv4n11spl_05.pdf> [retrieved on 20200331]
- CALEB ROBINSON: "Understanding intersection-over-union", 11 September 2018 (2018-09-11), XP055681639, Retrieved from the Internet <URL:https://calebrob.com/ml/2018/09/11/understanding-iou.html> [retrieved on 20200401]
- GIBSON R M ET AL: "Evaluation of Visual Aid Enhancement Algorithms for Real-time Embedded Systems", HIGH PERFORMANCE COMPUTING AND COMMUNICATION&2012 IEEE 9TH INTERNATIONAL CONFERENCE ON EMBEDDED SOFTWARE AND SYSTEMS (HPCC-ICESS), 2012 IEEE 14TH INTERNATIONAL CONFERENCE ON, IEEE, 25 June 2012 (2012-06-25), pages 1762 - 1769, XP032255494, ISBN: 978-1-4673-2164-8, DOI: 10.1109/HPCC.2012.265
- ANONYMOUS: "Classification Accuracy is Not Enough: More Performance Measures You Can Use", 20 June 2019 (2019-06-20), XP055681824, Retrieved from the Internet <URL:https://machinelearningmastery.com/classification-accuracy-is-not-enough-more-performance-measures-you-can-use/> [retrieved on 20200401]
- LOOKINGBILL A ET AL: "Reverse Optical Flow for Self-Supervised Adaptive Autonomous Robot Navigation", INTERNATIONAL JOURNAL OF COMPUTER VISION, KLUWER ACADEMIC PUBLISHERS, BO, vol. 74, no. 3, 3 January 2007 (2007-01-03), pages 287 - 302, XP019534966, ISSN: 1573-1405, DOI: 10.1007/S11263-006-0024-X
- TAKIKAWA TOWAKI ET AL: "Gated-SCNN: Gated Shape CNNs for Semantic Segmentation", 2019 IEEE/CVF INTERNATIONAL CONFERENCE ON COMPUTER VISION (ICCV) IEEE, 12 July 2019 (2019-07-12), pages 5228 - 5237, XP033723593, [retrieved on 20200224], DOI: 10.1109/ICCV.2019.00533

## Description

The present invention relates to a method and a device for measuring the boundary performance of a semantic segmentation network, a computer program as well as a computer readable storage medium and a control method.

### Prior art

In image recognition, semantic segmentation plays a major role. In order to recognize different objects in an image, it is necessary to detect and classify the objects of different types in the image. For example, with image recognition, computer is able to differentiate the sky from buildings from a road and/or from vegetation. This is achieved by semantic segmentation, making predictions, read the boundaries of the different objects run.

In order to measure the performance of the semantic segmentation, in particular the boundary performance of the semantic segmentation needs to be measured. In general, for this, the boundary itself has to be determined. Usually distance transform is used to get the boundary and afterwards pixels distance is used to threshold the boundary, which is highly inefficient.

The paper "Sengar, N.; et al.: Edge detection by combination of morphological operators with different edge detection operators. International Journal of Information & Computation Technology Number. 2014-01-01, pp. 1051-1056" describes and illustrates basic morphological operations, i.e. erosion, dilation, opening, and closing, with different edge operators.

The paper "Robinson, C.: Understanding intersection-over-union. 2018-09-11. calebrob.com/ml/2018/09/11/understanding-iou.html" describes a measure for determining how accurate an image segmentation is.

The paper "Gibson, R.M.; et al.: Evaluation of Visual Aid Enhancement Algorithms for Real-time Embedded Systems. IEEE 9th HPCC-ICESS. 2012-06-25. pp. 1762-1769" describes improved visual aid enhancement techniques by using edge detection methods.

The paper "Anonymous: Classification Accuracy is Not Enough: More Performance Measures You Can Use. 2019-06-20. machinelearningmastery.com/classification-accuracy-is-not-enough-more-performance-measures-you-can-use" discusses advanced methods of classification accuracy.

The paper "Takikawa, T. et al: Gated-SCNN: Gated Shape CNNs for Semantic Segmentation" describes a semantic segmentation network trained for semantically segmenting an input image. The training of the network uses a weighted sum of a crossentropy loss term and a differentiable boundary loss term. Evaluation of the model is based on a boundary metric, which is not morphologically thickened.

Thus, there is a need for an improved method for measuring the boundary performance.

### Disclosure of the invention

The known approaches are inefficient in terms of computation of the boundary metric. Additionally they only consider it as an evaluation metric, which means it cannot be used for training the neural network.

Thus, a fast and flexible way of improved measuring the boundary performance of the semantic segmentation network is provided. Additionally the boundary loss item is introduced, which is differentiable and thus can be used in the training of the semantic segmentation network in order to optimize the boundary performance.

Thus, the boundary performance can be measured in a more trustful and a more efficient way. Additionally, the boundary performance of the neural networks for semantic segmentation can be optimized directly.

### Embodiments

A first embodiment of the invention is directed to a method according to claim 1.

Preferably, the method is a computer-implemented method.

The term "thickened boundary mask", as used herein, relates to an enlarged boundary mask compared to the original boundary mask. Thus, the original boundary mask defines a thinner boundary between different classes of an image.

The term "class", as used herein, related to different types of objects contained in an image, which are segmented by the semantic segmentation network of a convolutional neural network. Preferably, on an image containing objects segmented by the semantic segmentation network, an object to be detected, is segmented from a background. In a binary image map of the image, the object to be detected, also called foreground, is preferably marked by the value '1' and the background is marked by the value '0'. For example, if a dog is segmented in the image by the semantic segmentation network, every pixel of the image relating to the dog gets the value '1' and every pixel of the image relating to the background gets the value '0'. Thus, a binary image map of the image is created. Examples of different classes segmented in an image comprise landscape, cars, humans, sky, trees and/or vegetation.

The term "morphological operations", as used herein, is a broad set of image processing operations that process images based on shapes. In a morphological operation, each pixel in the image is adjusted based on the value of other pixels in its neighbourhood. By choosing the size and shape of the neighbourhood, you can construct a morphological operation that is sensitive to specific shapes in the input image. Two basic morphological operators are erosion and dilation, erosion shrinks the foreground whereas dilation enlarges the foreground object.

The original boundary mask and/or the thickened boundary mask preferably are configured as a binary boundary mask.

Preferably, determining the original boundary mask comprises thresholding the image map.

Preferably, the true positive relates to the number of pixels correctly classified as foreground. Thus, the true positive rate relates to the number of pixels correctly classified as foreground compared to the total number of pixels of the ground truth of the foreground.

Preferably, the false positive relates to the number of pixels falsely classified as foreground. Thus, the false positive rate relates to the number of pixels falsely classified as foreground compared to the total number of pixels of the ground truth of the foreground.

Preferably, the false negative relates to the number of pixels falsely classified as background. Thus, the false negative rate relates to the number of pixels falsely classified as background compared to the total number of pixels of the ground truth of the foreground.

Getting the original boundary mask and the thickened boundary mask by using morphological operations allows for an improved evaluation of the boundary performance.

Thus, the measurement of the boundary performance can be improved.

In the invention, determining the original boundary mask comprises determining an original ground truth boundary mask and determining a prediction original boundary and determining the thickened boundary mask comprises determining a thickened ground truth boundary mask dependent on the original ground truth boundary mask and determining a thickened prediction boundary mask dependent on the original prediction boundary mask.

To allow more pixels in the prediction to be considered as boundary pixels, the boundary of the ground truth is thickened. When computing the true positive using the sum of the convolution of the thickened ground truth boundary mask and the predicted boundary the true positive rate would be higher compared to using the sum of the ground truth boundary mask and the predicted boundary mask. For the false positive rate and false negative rate similarity the score will be lower.

Thus, the measurement of the boundary performance can be improved.

In the invention, the method comprises the step determining a boundary loss function determined as weighted sum of a first loss term, L_{ce}, and a second loss term, L_{b}, wherein the first loss term represents a crossentropy loss for semantic segmentation and wherein the second loss term comprises a differentiable boundary loss term. α is a hyper parameter for weighting that can be tuned.

The boundary loss term is differentiable and thus can be used in the training of the semantic segmentation network in order to optimize the boundary performance.

The following function describes said relationship. $boundary loss function = {αL}_{ce} + \left(1-α\right) {L}_{b}$

In a preferred embodiment, the differentiable boundary loss term is determined dependent on the ground truth boundary mask and the prediction boundary mask.

Preferably, for one class a ground truth and a prediction is determined.

The differentiable boundary loss term is determined by ${L}_{b} = \frac{2 ∗ \left(ground truth∗ground truth boundary mask∗prediction∗ground truth boundary mask\right.}{ground truth ∗ ground truth boundary mask + prediction ∗ ground truth boundary mask}$ or ${L}_{b} = crossentropy \left(\begin{matrix}ground truth ∗ ground truth boundary mask , prediction \\ ∗ ground truth boundary mask\end{matrix}\right)$ which determines the crossentropy of the pixels of the boundary mask.

The boundary loss term L_{b} can be described as a loss term, which can be either calculated as cross entropy loss or dice loss that puts more weights on the boundary pixels, wherein the thickness of the boundary can be defined using the same idea from the boundary evaluation metric.

Thus, when optimizing jointly the normal pixel wise cross entropy loss and the boundary loss term, together with the tuning of the weighting parameter, the performance of the convolutional neural network on the boundary pixels can be improved.

Thus, the measurement of the boundary performance can be improved.

In a preferred embodiment, determining the original boundary mask comprises using morphological operations.

Erosion is a morphological operation in computer vision, which shrinks the area boundary using a structuring element filter. For example, the structuring element filter is a 3x3 square.

The original boundary mask is preferably determined by subtracting an eroded binary image map from the binary image map.

The following function describes said relationship. $original boundary mask = binary image map - erosion \left(binary image map\right)$

Thus, the measurement of the boundary performance can be improved.

In a preferred embodiment, determining the original boundary mask comprises using convolution with a second order Laplacian operator.

Preferably, using convolution, comprises that the original boundary mask is determined dependent on an original boundary map. The original boundary map is determined by a two dimensional convolution of the binary image map and an edge kernel, while padding is used. The following function describes said relationship. $original boundary map = conv 2 d \left(binary image map,edge kernel,padding=′SAME′\right.$

The term "padding = 'SAME"', as used herein, means that zero pending will be performed in order to make the output of the convolution the same shape as the input image.

Preferably, the edge kernel has the dimension 3x3. For example the edge kernel is defined as $edge _ kernel = \left[\begin{matrix}0 & 1 & 0 \\ 1 & - 4 & 1 \\ 0 & 1 & 0\end{matrix}\right] or \left[\begin{matrix}1 & 1 & 1 \\ 1 & - 8 & 1 \\ 1 & 1 & 1\end{matrix}\right]$

The original boundary mask is determined based on the determined original boundary map. Preferably, the original boundary mask is determined by the pixels of the boundary map with a value smaller than zero. The following function describes the relationship. $original boundary mask = original boundary map < 0$

Thus, the measurement of the boundary performance can be improved.

In a preferred embodiment, determining a thickened boundary mask comprises dilation of the original boundary mask, wherein the dilation of the original boundary mask thickens an inner boundary of the original boundary mask and an outer boundary of the original boundary mask.

Since in the boundary binary map itself is thin, when calculating the boundary score directly on it, the final score will tend to be very small. In practice, there will always be certain tolerance allowed, which means, it is allowed if the predicted boundary pixel is a few pictures of. To set a threshold to the tolerance, the proposed boundary metric uses morphological operations to compute the thickened boundary mask.

Dilation is the opposite morphological operation to erosion that enlarges the area boundary using a structuring element filter. The thickness of the boundary can then be controlled by the size of the structuring element filter size. The threshold of the tolerance is then controlled by the filter size. Preferably, the filter size is 3x3.

Thus, the inner boundary of the original boundary mask is enlarged.

The following function describes said relationship. $thickened boundary mask = dilation \left(original boundary mask\right)$

In a preferred embodiment, determining a thickened boundary dependent on the original boundary mask comprises erosion, wherein the erosion thickens only an inner boundary of the original boundary mask.

The following function describes said relationship. $thickened boundary mask = binary image map - erosion \left(binary image map,bigger kernel\right)$

The bigger kernel preferably has a higher dimension than the edge kernel.

Thus, the inner boundary of the original boundary and an outer boundary of the original boundary is enlarged.

Thus, the measurement of the boundary performance can be improved.

In an embodiment, the true positive rate is determined dependent on the thickened ground truth boundary mask and the original prediction boundary mask, wherein the false positive rate is determined dependent on the thickened ground truth boundary mask and the original prediction boundary mask, and/or wherein the false negative rate is determined dependent on the original ground truth boundary mask and the thickened prediction boundary mask.

Preferably, the true positive is determined by the sum of the multiplication of the thickened ground truth boundary mask with the original prediction boundary mask. The true positive rate is then determined dependent on the determined true positive and the ground truth. In other words the true positive defines the total number of pixels which have value 1 (foreground) on both masks.

Preferably, the false positive is determined by the sum of the multiplication of the thickened ground truth boundary mask with the original prediction boundary mask. The false positive rate is then determined dependent on the determined false positive and the ground truth.

Preferably, the false negative is determined by the sum of the multiplication of ground truth boundary mask with the thickened prediction boundary mask. The false negative rate is then determined dependent on the determined false negative and the ground truth.

In a preferred embodiment, the final boundary metric comprises an intersection over union score, loU-score.

Preferably, the intersection over union score, loU-score, is determined dependent on the true positive rate, the false positive rate and the false negative rate. Further preferably, the intersection over union score is determined by the true positive rate divided by the sum of the true positive rate, the false positive rate and the false negative rate.

The following function describes said relationship. $IoU Score = \frac{true positive rate}{true positive rate + false positive rate + false negative rate}$

Preferably, the loU-score is in a range between 0 and 1, wherein a higher value relates to a better score.

Thus, the measurement of the boundary performance can be improved.

In a preferred embodiment, the final boundary metric comprises an F1-score, wherein determining the final boundary metric comprises determining a precision factor and determining a recall factor, wherein the F1-score ifs determined dependent on the determined precision and the determined recall.

Preferably, the precision factor is determined dependent on the true positive rate and the false positive rate. Further preferably, the precision factor is determined by the true positive rate divided by the sum of the true positive rate and the false positive rate.

The following function describes said relationship. $Precision factor = \frac{true positive rate}{true positive rate + false positive rate}$

Preferably, the recall factor is determined dependent on the true positive rate and the false negative rate. Further preferably, the recall factor is determined by the true positive rate divided by the sum of the true positive rate and the false negative rate.

The following function describes said relationship. $Recall factor = \frac{true positive rate}{true positive rate + false negative rate}$

Preferably, the F1-score is determined dependent on the precision factor and the recall factor. Further preferably, the F1-score is determined by multiplying the precision factor with the factor 2 and the recall factor and device this by the sum of the precision factor and the recall factor.

The following function describes said relationship. $F 1 - Score = \frac{2 ∗ precision factor ∗ recall factor}{precision factor + recall factor}$

Preferably, the F1-score is in a range between 0 and 1, wherein a higher value relates to a better score.

A second embodiment of the invention is directed to a device according to claim 9.

A third embodiment of the invention is directed to a computer program according to claim 10.

A fourth embodiment of the invention is directed to a computer-readable data carrier according to claim 11.

A fifth embodiment of the invention is directed to a control method according to claim 12.

Preferably, the at least partly autonomous robot comprises an at least partly autonomous vehicle. Alternatively, the at least partly autonomous robot may be any other mobile robot, for example those moving by flying, swimming, diving or walking. In an example, the at least partly autonomous robot may be an at least partly autonomous lawn mower or an at least partly cleaning robot.

Preferably, controlling the at least partly autonomous robot comprises using a driver assistance function for lane keeping support and lane departure warning for the at least partly autonomous robot.

The subject matter of the invention will be explained in more detail in the following text with reference to preferred exemplary embodiments, which are illustrated in the attached drawings, in which:
- Fig. 1: shows determining the original boundary mask using erosion;
- Fig. 2: shows different boundary maps;
- Fig. 3: shows a schematic representation of a dilation of a boundary;
- Fig. 4: shows a comparison of true positive, false positive and false negative between an original boundary and a thickened boundary based on a relatively bad prediction of the boundary;
- Fig. 5: shows a comparison of true positive, false positive and false negative between an original boundary and a thickened boundary based on a relatively good prediction of the boundary; and
- Fig. 6: shows a schematic representation of the method for measuring the boundary performance of a semantic segmentation network.

The reference symbols used in the drawings, and their meanings, are listed in summary form in the list of reference symbols. In principle, identical parts are provided with the same reference symbols in the figures.

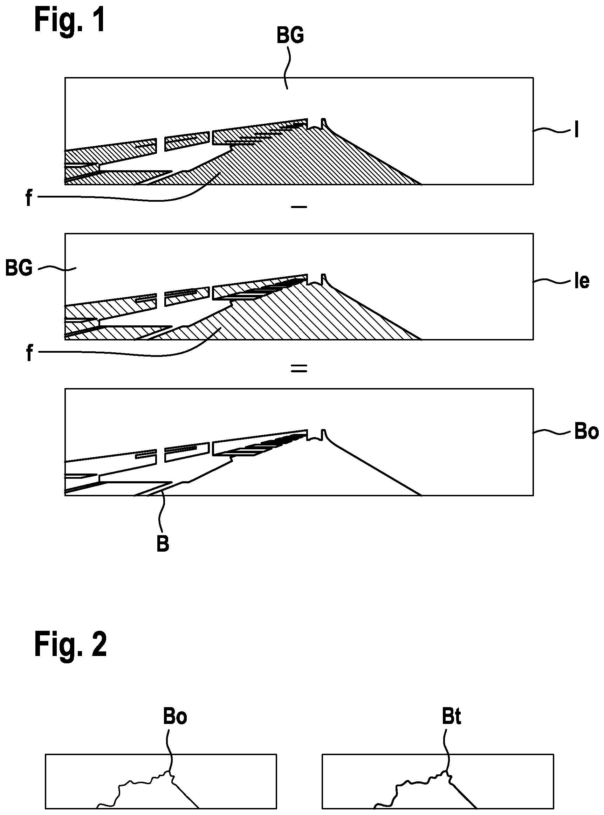

Fig. 1 shows an image map I. The image map I is a binary image map I dividing the image map I into a foreground f and a background BG. In order to compute a binary boundary B between the foreground f and the background BG, an original boundary mask Bo is determined.

Therefore morphological operations, in this case erosion, are used. Using erosion, an area of the boundary B is shrinked using a structural element filter. In the shown case, the structuring element filter is a 3x square. Applying erosion to the image map I, determines an eroded image map le. Comparing the image map I with the eroded image map le, it can be seen that an eroded foreground fe of the eroded image map le is smaller than the foreground f of the image map I. Thus, an eroded background BGe of the eroded image map le is bigger than the background BG of the image map I.

Subtracting the eroded image map le from the image map I to compare them leads to the original boundary mask Bo. The erosion applied to the image map I thus determined the boundary B of the original boundary map Bo.

Fig. 2 shows the original boundary map Bo with the boundary B. As can be seen, the boundary B itself is relatively thin. Calculating a boundary score, relating to the quality of the determined boundary B, directly on the relatively thin boundary B generally leads to a small boundary score. Usually in the real world use-case, you need to tolerate some deviations on the boundaries, e.g. 10 pixels in the perimeter. Then it is very useful to have the thickened boundary calculation, since in this case you can have some tolerance thus not achieving a score that is too low and in the meanwhile still correctly reflect the performance. Thus, the boundary B needs to be thickened. A determined thickened boundary map Bt is shown in Fig. 2 comprising a thickened boundary Bth. When comparing the boundary B with the thickened boundary Bth it can be seen that the thickened boundary Bth is enlarged compared to the boundary B. This should lead to a better boundary score for the thickened boundary Bth compared to the boundary B.

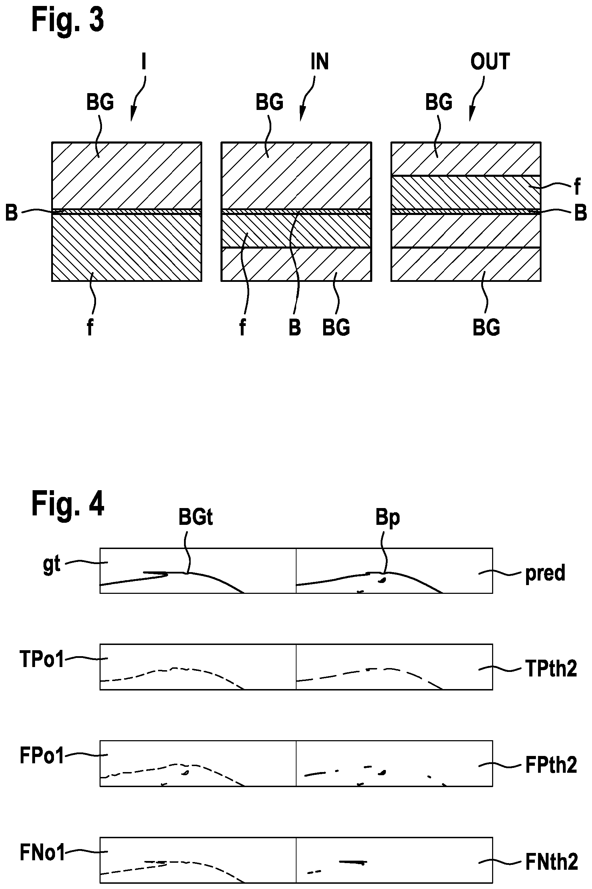

In order to determine the thickened boundary mask Bt, preferably morphological operations are used. In case of Fig. 3, dilation of the original boundary mask Bo is shown to enlarge an inner boundary IN and an outer boundary OUT of an image map I. As shown in Fig. 3 the image map I comprises a foreground f and a background BG segmented by the boundary B. Using dilation, an inner boundary IN is determined at a foreground side of the boundary B and an outer boundary OUT is determined at a background side of the boundary B. Thus, a thickened boundary Bt can be determined.

Fig. 4 shows a comparison of true positive, false positive and false negative between an original boundary and a thickened boundary based on a relatively bad prediction of the boundary.

First of all, a ground truth gt of the ground truth boundary Bgt is shown, which relates to the boundary between foreground and background as shown in the original image. During image recognition based on a convolutional neural network, when semantic segmentation is performed, this boundary between foreground and background needs to be predicted and a predicted boundary Bp has to be determined. In general, the predicted boundary Bp is not identical with the ground truth boundary Bgt due to different uncertainties in the semantic segmentation of the convolutional neural network.

Fig. 4 demonstrates the advantage of a thickened boundary mask compared to an original boundary mask, as described herein. As can be seen, the predicted boundary Bp differs relatively strongly from the ground truth boundary gt.

A first original true positive TPo1 is shown, relating to the number of pixels correctly classified as the boundary of the foreground, based on an original boundary mask Bo. Compared to this, a first thickened true positive TPth1 is shown, relating to the number of pixels correctly classified as the boundary of the foreground, based on a thickened boundary mask Bt. The first thickened true positive TPth1 achieves an acceptable score while still correctly reflecting the performance of the boundary compared to the first original true positive TPo1.

A first original false positive FPo1 is shown, relating to the number of pixels falsely classified as the boundary of the foreground, based on an original boundary mask Bo. Compared to this, a first thickened false positive FPth1 is shown, relating to the number of pixels falsely classified as the boundary of the foreground, based on a thickened boundary mask Bt. The first thickened false positive FPth1 has a lower number of falsely classified pixels than the first original false positive FPo1 achieves an acceptable score while still correctly reflecting the performance of the boundary compared to the first original false positive FPo1.

A first original false negative FNo1 is shown, relating to the number of pixels falsely not classified as the boundary of the foreground, based on an original boundary mask Bo. Compared to this, a first thickened false negative FNth1 is shown, relating to the number of pixels falsely not classified as the boundary of the foreground, based on a thickened boundary mask Bt. The first thickened false negative FNth1 achieves an acceptable score while still correctly reflecting the performance of the boundary compared to the first original false negative FNo1.

The prediction boundary mask Bp, as described, does not look precise compared to the ground truth boundary mask Bgt. However, the prediction still has a very high loU-score of 0.97 in this case. The proposed boundary score is at a reasonable value of 0.74. For example, a relatively bad boundary without thickening would achieve a loU-score in the range of about 0.3.

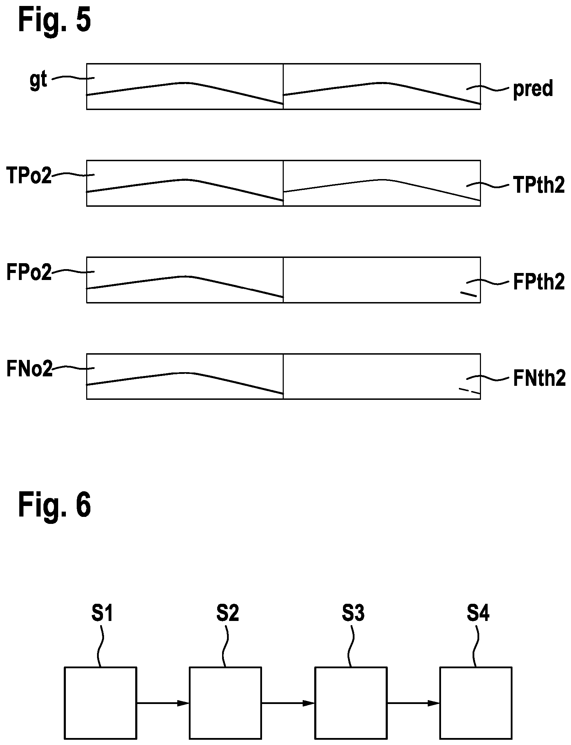

Fig. 5 demonstrates the advantage of a thickened boundary mask compared to an original boundary mask, as described herein. As can be seen, the prediction boundary Bp differs only slightly (in comparison to Fig. 4) from the ground truth boundary gt.

A second original true positive TPo2 is shown, relating to the number of pixels correctly classified as the boundary of the foreground, based on an original boundary mask Bo. Compared to this, a second thickened true positive TPth2 is shown, relating to the number of pixels correctly classified as the boundary of the foreground, based on a thickened boundary mask Bt. The second thickened true positive TPth2 has a large number of correctly classified pixels than the first original true positive TPo2 and thus is more accurate than the first original true positive TPo2.

A second original false positive FPo2 is shown, relating to the number of pixels falsely classified as the boundary of the foreground, based on an original boundary mask Bo. Compared to this, a second thickened false positive FPth2 is shown, relating to the number of pixels falsely classified as the boundary of the foreground, based on a thickened boundary mask Bt. The second thickened false positive FPth2 has a lower number of falsely classified pixels than the second original false positive FPo2 and thus is more accurate than the second original false positive FPo2. The second thickened false positive FPth2 comprises a relatively small amount of falsely classified pixels.

A second original false negative FNo2 is shown, relating to the number of pixels falsely not classified as the boundary of the foreground, based on an original boundary mask Bo. Compared to this, a second thickened false negative FNth2 is shown, relating to the number of pixels falsely not classified as the boundary of the foreground, based on a thickened boundary mask Bt. The second thickened false negative FNth2 has a lower number of falsely not classified pixels than the second original false negative FNo2 and thus is more accurate than the second original false negative FNo2. The second thickened false negative FNth2 comprises a relatively small amount of falsely classified pixels.

The predicted boundary mask Bp, as described, looks precise compared to the ground truth boundary mask Bgt. The prediction has a very high loU-score of 0.99 in this case. The proposed boundary score is at a high value of 0.95. For example, a relatively good boundary without thickening would achieve a loU-score in the range of about 0.5.

Fig. 6 shows a schematic representation of the method for measuring the boundary performance of a semantic segmentation network. In step S1 an original boundary mask Bo is determined defining a boundary between different classes of an image. In step S2 a thickened boundary mask Bt is determined dependent on the original boundary mask Bo using morphological operations. In step S3 a true positive rate, a false positive rate and a false negative rate is determined dependent on the original boundary mask Bo and/or the thickened boundary mask Bt. In step S4 a final boundary metric is determined dependent on the determined true positive rate, the determined false positive rate and the determined false negative rate.

## Claims

1. Method for training a semantic segmentation network using a differentiable boundary loss term in order to optimise the boundary performance of the semantic segmentation network, wherein the boundary performance is indicated by a boundary metric, the method comprising the steps:
determining (S1) an original boundary mask (Bo) defining a boundary between different classes of an image by determining an original ground truth boundary mask and determining an original prediction boundary mask which is determined by segmenting the image by the semantic segmentation network;
determining (S2) a thickened ground truth boundary mask dependent on the original ground truth boundary mask and a thickened prediction boundary mask dependent on the original prediction boundary mask using morphological operations;
determining (S3) a true positive rate, a false positive rate and a false negative rate dependent on the original boundary mask (Bo) and the thickened boundary mask (Bt), whereby the true positive rate relates to the number of pixels correctly classified as foreground compared to the total number of pixels of the thickened ground truth boundary mask, the false positive rate relates to the number of pixels falsely classified as foreground compared to the total number of pixels of the thickened ground truth boundary mask and the false negative rate relates to the number of pixels falsely classified as background compared to the total number of pixels of the ground truth of the foreground and uses the thickened prediction boundary mask;
determining (S4) a final boundary metric, indicating the boundary performance, dependent on the determined true positive rate, the determined false positive rate and the determined false negative rate ;
determining a boundary loss function determined as the weighted sum of a first loss term, L_{ce}, and a second loss term, L_{b}, wherein the first loss term represents a crossentropy loss for semantic segmentation and wherein the second loss term comprises the differentiable boundary loss term, and the boundary loss function being used for training the semantic segmentation network.

2. Method of claim 1, wherein
the differentiable boundary loss term is determined dependent on the ground truth boundary mask and the prediction boundary mask.

3. Method of any of claims 1 or 2, wherein
determining the original boundary mask (Bo) comprises using convolution with a second order Laplacian operator.

4. Method of any of the preceding claims, wherein
determining a thickened boundary mask (Bt) comprises dilation of the original boundary mask (Bo), wherein the dilation of the original boundary mask (Bo) thickens an inner boundary of the original boundary mask (Bo) and an outer boundary of the original boundary mask (Bo).

5. Method of any of the claims 1 to 4, wherein
determining a thickened boundary mask comprises erosion of the original boundary mask (Bo); wherein
the erosion thickens only an inner boundary of the original boundary mask (Bo).

6. Method of any of the preceding claims, wherein
the true positive rate is determined dependent on the thickened ground truth boundary mask and the original prediction boundary mask; wherein
the false positive rate is determined dependent on the thickened ground truth boundary mask and the original prediction boundary mask; and
wherein the false negative rate is determined dependent on the original ground truth boundary mask and the thickened prediction boundary mask.

7. Method of any of the preceding claims, wherein
the final boundary metric comprises an intersection over union score.

8. Method of any of the preceding claims 1 to 6, wherein
the final boundary metric comprises an F1-score, wherein
determining the final boundary metric comprises determining a precision factor and determining a recall factor, wherein the F1-score is determined dependent on the determined precision and the determined recall

9. Device, configured for executing a method of any of claims 1 to 8.

10. Computer program, comprising instructions which, when the program is executed by a computer, cause the computer to carry out the method of any of claims 1 to 8.

11. Computer-readable data carrier, having stored there on the computer program, of claim 10.

12. Control method of an at least partly autonomous robot, comprising the steps:
receiving environmental image data of the at least partly autonomous robot;
executing an image recognition on the received environmental image data, comprising executing the method of any of the claims 1 to 8; and
controlling the at least partly autonomous robot dependant on the executed image recognition.

## Patentansprüche

1. Verfahren zum Trainieren eines semantischen Segmentierungsnetzes unter Verwendung eines differenzierbaren Grenzverlustterms, um die Grenzleistungsfähigkeit des semantischen Segmentierungsnetzes zu optimieren, wobei die Grenzleistungsfähigkeit durch eine Grenzmetrik angegeben wird, wobei das Verfahren die Schritte umfasst:
Bestimmen (S1) einer ursprünglichen Grenzmaske (Bo), die eine Grenze zwischen verschiedenen Klassen eines Bildes definiert, durch Bestimmen einer ursprünglichen Ground-Truth-Grenzmaske und Bestimmen einer ursprünglichen Vorhersagegrenzmaske, die durch Segmentieren des Bildes durch das semantische Segmentierungsnetz bestimmt wird;
Bestimmen (S2) einer verdickten Ground-Truth-Grenzmaske in Abhängigkeit von der ursprünglichen Ground-Truth-Grenzmaske und einer verdickten Vorhersagegrenzmaske in Abhängigkeit von der ursprünglichen Vorhersagegrenzmaske unter Verwendung morphologischer Operationen;
Bestimmen (S3) einer Richtig-positiv-Rate, einer Falsch-positiv-Rate und einer Falsch-negativ-Rate in Abhängigkeit von der ursprünglichen Grenzmaske (Bo) und der verdickten Grenzmaske (Bt), wobei sich die Richtig-positiv-Rate auf die Anzahl von Pixeln, die korrekt als Vordergrund klassifiziert werden, im Vergleich zu der Gesamtanzahl von Pixeln der verdickten Ground-Truth-Grenzmaske bezieht,
die Falsch-positiv-Rate sich auf die Anzahl von Pixeln, die fälschlicherweise als Vordergrund klassifiziert werden, Im Vergleich zu der Gesamtanzahl von Pixeln der verdickten Ground-Truth-Grenzmaske bezieht und sich die Falsch-negativ-Rate auf die Anzahl von Pixeln, die fälschlicherweise als Hintergrund klassifiziert werden, im Vergleich zu der Gesamtanzahl von Pixeln der Ground-Truth des Vordergrunds bezieht und die verdickte Vorhersagegrenzmaske verwendet;
Bestimmen (S4) einer endgültigen Grenzmetrik, die die Grenzleistungsfähigkeit angibt, in Abhängigkeit von der bestimmten Richtig-positiv-Rate, der bestimmten Falsch-positiv-Rate und der bestimmten Falsch-negativ-Rate;
Bestimmen einer Grenzverlustfunktion, die als die gewichtete Summe eines ersten Verlustterms, L_{ce}, und eines zweiten Verlustterms, L_{b}, bestimmt wird, wobei der erste Verlustterm einen Kreuzentropieverlust für eine semantische Segmentierung repräsentiert und wobei der zweite Verlustterm den differenzierbaren Grenzverlustterm umfasst und wobei die Grenzverlustfunktion zum Trainieren des semantischen Segmentierungsnetzes verwendet wird.

2. Verfahren nach Anspruch 1, wobei
der differenzierbare Grenzverlustterm in Abhängigkeit von der Ground-Truth-Grenzmaske und der Vorhersagegrenzmaske bestimmt wird.

3. Verfahren nach einem der Ansprüche 1 oder 2, wobei
das Bestimmen der ursprünglichen Grenzmaske (Bo) Verwenden einer Faltung mit einem Laplace-Operator zweiter Ordnung umfasst.

4. Verfahren nach einem der vorstehenden Ansprüche, wobei
das Bestimmen einer verdickten Grenzmaske (Bt) eine Dilatation der ursprünglichen Grenzmaske (Bo) umfasst, wobei die Dilatation der ursprünglichen Grenzmaske (Bo) eine innere Grenze der ursprünglichen Grenzmaske (Bo) und eine äußere Grenze der ursprünglichen Grenzmaske (Bo) verdickt.

5. Verfahren nach einem der Ansprüche 1 bis 4, wobei
das Bestimmen einer verdickten Grenzmaske eine Erosion der ursprünglichen Grenzmaske (Bo) umfasst; wobei
die Erosion nur eine innere Grenze der ursprünglichen Grenzmaske (Bo) verdickt.

6. Verfahren nach einem der vorstehenden Ansprüche, wobei
die Richtig-positiv-Rate in Abhängigkeit von der verdickten Ground-Truth-Grenzmaske und der ursprünglichen Vorhersagegrenzmaske bestimmt wird; wobei
die Falsch-positiv-Rate in Abhängigkeit von der verdickten Ground-Truth-Grenzmaske und der ursprünglichen Vorhersagegrenzmaske bestimmt wird; und wobei
die Falsch-negativ-Rate in Abhängigkeit von der ursprünglichen Ground-Truth-Grenzmaske und der verdickten Vorhersagegrenzmaske bestimmt wird.

7. Verfahren nach einem der vorstehenden Ansprüche, wobei
die endgültige Grenzmetrik ein Intersection-over-Union-Wert ist.

8. Verfahren nach einem der vorstehendenen Ansprüche 1 bis 6, wobei
die endgültige Grenzmetrik ein F1-Maß umfasst, wobei
das Bestimmen der endgültigen Grenzmetrik Bestimmen eines Genauigkeitsfaktors und Bestimmen eines Trefferquotenfaktors umfasst, wobei das F1-Maß in Abhängigkeit von der bestimmten Genauigkeit und der bestimmten Trefferquote bestimmt wird.

9. Vorrichtung, die zum Ausführen eines Verfahrens nach einem der Ansprüche 1 bis 8 konfiguriert ist.

10. Computerprogramm, das Anweisungen umfasst, die, wenn das Programm durch einen Computer ausgeführt wird, den Computer dazu veranlassen, das Verfahren nach einem der Ansprüche 1 bis 8 durchzuführen.

11. Computerlesbarer Datenträger mit einem darauf gespeicherten Computerprogramm nach Anspruch 10.

12. Steuerungsverfahren eines wenigstens teilweise autonomen Roboters, das die folgenden Schritte umfasst:
Empfangen von Umgebungsbilddaten des wenigstens teilweise autonomen Roboters;
Ausführen einer Bilderkennung an den empfangenen Umgebungsbilddaten, was Ausführen des Verfahrens nach einem der Ansprüche 1 bis 8 umfasst; und
Steuern des wenigstens teilweise autonomen Roboters in Abhängigkeit von der ausgeführten Bilderkennung.

## Revendications

1. Procédé d'entraînement d'un réseau de segmentation sémantique utilisant un terme de perte aux frontières différentiable de manière à optimiser les performances aux frontières du réseau de segmentation sémantique, les performances aux frontières étant indiquées par une métrique de frontière, le procédé comprenant les étapes suivantes :
déterminer (S1) un masque de frontière d'origine (Bo) définissant une frontière entre différentes classes d'une image par détermination d'un masque de frontière de vérité de terrain d'origine et déterminer un masque de frontière de prédiction d'origine qui est déterminé par segmentation de l'image par le réseau de segmentation sémantique ;
déterminer (S2) un masque de frontière de vérité de terrain épaissi dépendant du masque de frontière de vérité de terrain d'origine et un masque de frontière de prédiction épaissi dépendant du masque de frontière de prédiction d'origine à l'aide d'opérations morphologiques ;
déterminer (S3) un taux de vrais positifs, un taux de faux positifs et un taux de faux négatifs dépendant du masque de frontière d'origine (Bo) et du masque de frontière épaissi (Bt), où le taux de vrais positifs se rapporte au nombre de pixels correctement classés en premier plan par rapport au nombre total de pixels du masque de frontière de vérité de terrain épaissi, le taux de faux positifs se rapporte au nombre de pixels faussement classés en tant que premier plan par rapport au nombre total de pixels du masque de frontière de vérité de terrain épaissi, et le taux de faux négatifs se rapporte au nombre de pixels faussement classés en tant qu'arrière-plan par rapport au nombre total de pixels de la vérité de terrain du premier plan et utilise le masque de frontière de prédiction épaissi ;
déterminer (S4) une métrique de frontière finale indiquant la performance aux frontières, en fonction du taux de vrais positifs déterminé, du taux de faux positifs déterminé et du taux de faux négatifs déterminé ;
déterminer une fonction de perte aux frontières déterminée comme étant la somme pondérée d'un premier terme de perte, L_{ce}, et d'un deuxième terme de perte, L_{b}, où le premier terme de perte représente une perte d'entropie croisée pour la segmentation sémantique et où le deuxième terme de perte comprend le terme de perte aux frontières différentiable, et la fonction de perte aux frontières est utilisée pour l'entraînement du réseau de segmentation sémantique.

2. Procédé selon la revendication 1, dans lequel
le terme de perte aux frontières différentiable est déterminé en fonction du masque de frontière de vérité de terrain et du masque de frontière de prédiction.

3. Procédé selon l'une quelconque des revendications 1 ou 2, dans lequel
la détermination du masque de frontière d'origine (Bo) comprend l'utilisation d'une convolution avec un opérateur laplacien de deuxième ordre.

4. Procédé selon l'une quelconque des revendications précédentes, dans lequel la détermination d'un masque de frontière épaissi (Bt) comprend la dilitation du masque de frontière d'origine (Bo), où la dilatation du masque de frontière d'origine (Bo) épaissit une frontière interne du masque de frontière d'origine (Bo) et une frontière externe du masque de frontière d'origine (Bo).

5. Procédé selon l'une quelconque des revendications 1 à 4, dans lequel
la détermination d'un masque de frontière épaissi comprend l'érosion du masque de frontière d'origine (Bo) ; où
l'érosion épaissit uniquement une frontière interne du masque de frontière d'origine (Bo).

6. Procédé selon l'une quelconque des revendications précédentes, dans lequel le taux de vrais positifs est déterminé en fonction du masque de frontière de vérité de terrain épaissi et du masque de frontière de prédiction d'origine ; où le taux de faux positifs est déterminé en fonction du masque de frontière de vérité de terrain épaissi et du masque de frontière de prédiction d'origine ; et où
le taux de faux négatifs est déterminé en fonction du masque de frontière de vérité de terrain d'origine et du masque de frontière de prédiction épaissi.

7. Procédé selon l'une quelconque des revendications précédentes, dans lequel la métrique de frontière finale comprend une valeur d'intersection sur union.

8. Procédé selon l'une quelconque des revendications 1 à 6, dans lequel
la métrique de frontière finale comprend un score F1, où
la détermination de la métrique de frontière finale comprend la détermination d'un facteur de précision et la détermination d'un facteur de rappel, où la détermination du score F1 dépend de la précision déterminée et du rappel déterminé.

9. Dispositif configuré pour exécuter un procédé selon l'une quelconque des revendications 1 à 8.

10. Programme d'ordinateur comprenant des instructions qui, lorsque le programme est exécuté par un ordinateur, amènent l'ordinateur à mettre en œuvre le procédé selon l'une quelconque des revendications 1 à 8.

11. Support de données lisible par ordinateur sur lequel est stocké le programme d'ordinateur selon la revendication 10.

12. Procédé de commande d'un robot au moins partiellement autonome, le procédé comprenant les étapes suivantes :
recevoir des données d'images environnementales du robot au moins partiellement autonome ;
exécuter une reconnaissance d'image sur les données d'image environnementale reçues, comprenant l'exécution du procédé selon l'une quelconque des revendications 1 à 8 ; et
commander le robot au moins partiellement autonome en fonction de la reconnaissance d'image exécutée.
